# EUROPÄISCHE PATENTSCHRIFT

(11) **EP 1 811 210 B1**
(45) Veröffentlichungstag und Bekanntmachung des Hinweises auf die Patenterteilung: **19.03.2014**
(21) Anmeldenummer: 06026540.2
(22) Anmeldetag: 21.12.2006
(51) Int. Cl.: F16J 15/32, F16J 15/12, F16J 3/04

(54) **Radialdichtung**
Radial seal
Joint radial

(30) Priorität: 24.01.2006 DE 102006003194
(43) Veröffentlichungstag der Anmeldung: 25.07.2007
(73) Patentinhaber: ElringKlinger AG, 72581 Dettingen (DE)
(72) Erfinder: Schleker, Martin, 72525 Bremelau (DE); Bendl, Klaus, 75038 Oberderdingen (DE)
(74) Vertreter: Hoeger, Stellrecht & Partner Patentanwälte

(56) Entgegenhaltungen:
- EP-A- 0 980 982
- WO-A-95/09998
- WO-A-2006/033197
- US-A1- 2005 173 869

## Beschreibung

Die vorliegende Erfindung betrifft eine Radialdichtung zur Abdichtung zwischen einem radial innerhalb der Radialdichtung angeordneten ersten Bauteil und einem radial außerhalb der Radialdichtung angeordneten zweiten Bauteil.

Solche Radialdichtungen können insbesondere dann eingesetzt werden, wenn eine axiale Ausführung der Abdichtung aufgrund der unzureichenden Steifigkeit eines der beiden gegeneinander abzudichtenden Bauteile nicht möglich ist.

Die US 2005/173869 A1 offenbart eine statische Radialdichtung zur Abdichtung zwischen einem radial innerhalb der Radialdichtung angeordneten ersten Bauteil und einem radial außerhalb der Radialdichtung angeordneten zweiten Bauteil, umfassend einen rotationssymmetrischen Dichtungskörper mit einer inneren Dichtfläche zum Anlegen an das erste Bauteil und einer äußeren Dichtfläche zum Anlegen an das zweite Bauteil, ein erstes Versteifungselement, welches die innere Dichtfläche gegen eine radial nach außen wirkende Presskraft abstützt, und ein zweites Versteifungselement, welches die äußere Dichtfläche gegen eine radial nach innen wirkende Presskraft abstützt.

Der vorliegenden Erfindung liegt die Aufgabe zugrunde, eine Radialdichtung der eingangs genannten Art zu schaffen, welche zur Abdichtung zwischen zwei Bauteilen geeignet ist, von denen mindestens eines eine nicht rotationssymmetrische Anlagefläche für die Radialdichtung aufweist.

Diese Aufgabe wird erfindungsgemäß durch eine Radialdichtung gemäß Anspruch 1 gelöst.

Die erfindungsgemäße Radialdichtung ermöglicht es, Bauteile, die aufgrund ihrer Funktion eine Anlagefläche für die Dichtung aufweisen, welche nicht rotationssymmetrisch ausgebildet ist, durch eine an die nicht rotationssymmetri-sche Form dieser Anlagefläche angepasste, formgebundene Dichtung abzudichten.

Bislang ist die Abdichtung einer solchen nicht rotationssymmetrischen Form, insbesondere einer ovalen Form, nur durch eine axiale Abdichtung realisierbar; eine solche axiale Ausführung der Abdichtung kann aber, insbesondere bei unzureichender Steifigkeit eines der abzudichtenden Bauteile, nicht immer realisiert werden.

Die erfindungsgemäße Radialdichtung ermöglicht auch bei geringer Steifigkeit eines oder beider abzudichtender Bauteile eine zuverlässige, formgebundene zweifache radiale Abdichtung sowohl an dem innerhalb der Radialdichtung angeordneten ersten Bauteil als auch an dem radial außerhalb der Radialdichtung angeordneten zweiten Bauteil.

Ferner ermöglicht es die erfindungsgemäße Radialdichtung, Versatztoleranzen zwischen den beiden abzudichtenden Bauteilen sowohl in radialer als auch in axialer Richtung großzügig auszugleichen.

Das Verhältnis der Länge des Dichtungskörpers zur Breite des Dichtungskörpers beträgt bei einer bevorzugten Ausgestaltung der erfindungsgemäßen Radialdichtung mindestens 1,2:1, vorzugsweise mindestens 1,5:1.

Dabei ist unter der Länge des Dichtungskörpers die größte Ausdehnung des Dichtungskörpers senkrecht zur Dichtungsachse und unter der Breite des Dichtungskörpers die kleinste Ausdehnung des Dichtungskörpers senkrecht zur Dichtungsachse zu verstehen.

Grundsätzlich kann der Dichtungskörper der erfindungsgemäßen Radialdichtung an jede beliebige, nicht rotationssymmetrische Form der Anlagefläche des ersten Bauteils und/oder des zweiten Bauteils angepasst werden.

Bei einer bevorzugten Ausgestaltung der Erfindung ist vorgesehen, dass der Dichtungskörper eine in der Draufsicht im wesentlichen ovale Form aufweist.

Grundsätzlich könnte vorgesehen sein, dass das erste Versteifungselement und/oder das zweite Versteifungselement sich nur partiell, d. h. über einen Winkelbereich von weniger als 360°, um die Dichtungsachse der Radialdichtung herum erstrecken.

Eine besonders gute Formstabilität der Radialdichtung wird jedoch dadurch erzielt, wenn das erste Versteifungselement und/oder das zweite Versteifungselement ringförmig geschlossen ausgebildet sind.

Um eine gute Abdichtung gegenüber dem radial innerhalb der Radialdichtung angeordneten ersten Bauteil zu erzielen, ist vorzugsweise vorgesehen, dass das erste Versteifungselement und/oder das zweite Versteifungselement eine an die Gestalt einer Umfangsfläche des ersten Bauteils angepasste Form aufweisen.

Zur Erzielung einer guten Abdichtung an dem radial außerhalb der Radialdichtung angeordneten zweiten Bauteil kann ferner vorgesehen sein, dass das erste Versteifungselement und/oder das zweite Versteifungselement eine an die Gestalt einer Anlagefläche des zweiten Bauteils angepasste Form aufweisen.

Das erste Versteifungselement und/oder das zweite Versteifungselement können zumindest teilweise in den Dichtungskörper eingebettet sein. Dies bietet den Vorteil, dass die Radialdichtung als eine bereits bei der Herstellung des Dichtungskörpers komplettierte Einheit in einfacher Weise handhabbar ist.

Das erste Versteifungselement und/oder das zweite Versteifungselement liegen zumindest teilweise an einer Außenfläche des Dichtungskörpers an. Ein solches an einer Außenfläche des Dichtungskörpers anliegendes Versteifungselement kann relativ zu dem Dichtungskörper verschoben werden, was einen Ausgleich größerer Versatztoleranzen ermöglichen kann.

Um eine ausreichende Versteifung des Dichtungskörpers zu erzielen, ist vorteilhafterweise vorgesehen, dass das erste Versteifungselement und/oder das zweite Versteifungselement aus einem metallischen Material, beispielsweise aus einer Aluminiumlegierung oder aus einem Stahlmaterial, gebildet sind.

Das erste Versteifungselement und das zweite Versteifungselement sind vorzugsweise in der axialen Richtung der Radialdichtung gegeneinander versetzt angeordnet.

Um Versatztoleranzen zwischen den abzudichtenden Bauteilen besonders gut ausgleichen zu können, ist es günstig, wenn das erste Versteifungselement und das zweite Versteifungselement in der axialen Richtung und/oder in der radialen Richtung der Radialdichtung relativ zueinander beweglich sind.

Das erste Versteifungselement und das zweite Versteifungselement weisen jeweils mindestens einen im wesentlichen in axialer Richtung ausgerichteten Abschnitt auf.

Das erste Versteifungselement und das zweite Versteifungselement weisen jeweils mindestens einen im wesentlichen in radialer Richtung der Radialdichtung ausgerichteten Abschnitt auf.

Der Dichtungskörper der Radialdichtung ist vorzugsweise aus einem, insbesondere elastomeren, Kunststoffmaterial gebildet.

Beispielsweise kann vorgesehen sein, dass der Dichtungskörper aus einem Ethylen-Acrylat-Kautschuk (AEM) oder aus einem Fluor-Kautschuk (FPM) gebildet ist.

Um besonders große Versatztoleranzen zwischen den abzudichtenden Bauteilen in radialer Richtung und/oder in axialer Richtung ausgleichen zu können, kann vorgesehen sein, dass der Dichtungskörper einen Ausgleichsbereich umfasst, welcher in der radialen Dichtung und/oder in der axialen Richtung des Dichtungskörpers verformbar ist.

Ein solcher Ausgleichsbereich kann insbesondere einen im wesentlichen U-förmigen Querschnitt aufweisen.

Die erfindungsgemäße Radialdichtung eignet sich insbesondere zur Abdichtung zwischen einem Getriebegehäusedeckel und einer durch eine Durchtrittsöffnung des Deckels hindurchgeführten Steckereinheit.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen vertikalen Schnitt durch einen Gehäusedeckel und eine sich durch eine Durchtrittsöffnung des Gehäusedeckels hindurch erstreckende Steckereinheit, wobei die Steckereinheit und der Gehäusedeckel mittels einer Radialdichtung gegeneinander abgedichtet sind;
- Fig. 2: eine schematische perspektivische Darstellung der Radialdichtung aus Figur 1;
- Fig. 3: eine schematische Draufsicht auf die Unterseite der Radialdichtung;
- Fig. 4: einen schematischen Querschnitt durch die Radialdichtung längs der Linie 4-4 in Figur 3;
- Fig. 5: einen schematischen Längsschnitt durch die Radialdichtung längs der Linie 5-5 in Figur 3;
- Fig. 6: eine vergrößerte Darstellung des Bereichs I aus Figur 5; und
- Fig. 7: einen schematischen vertikalen Schnitt durch eine zweite Ausführungsform einer Radialdichtung, welche einen verformbaren Ausgleichsbereich zum Ausgleich von radialen und/oder axialen Toleranzen umfasst.

Gleiche oder funktional äquivalente Elemente sind in allen Figuren mit denselben Bezugszeichen bezeichnet.

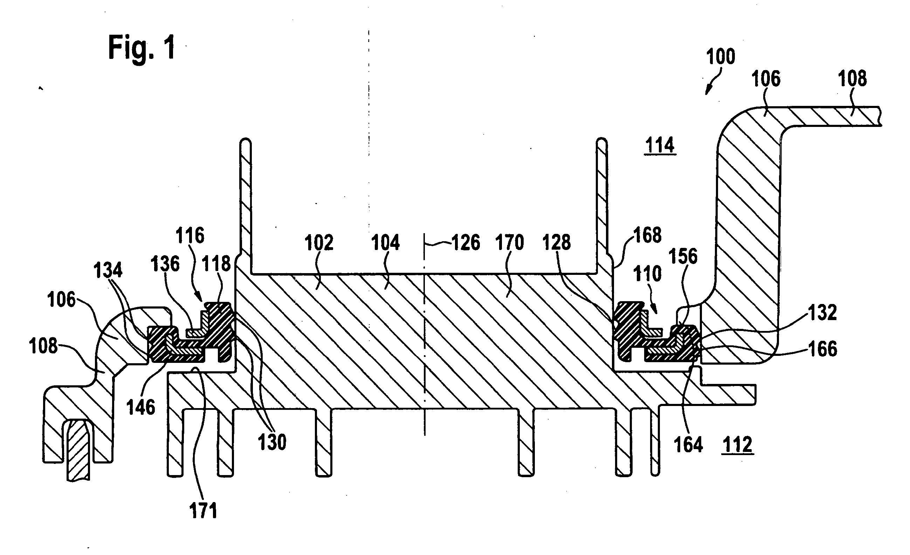

Eine in Figur 1 dargestellte, als ganzes mit 100 bezeichnete Baugruppe umfasst ein erstes Bauteil 102 in Form einer Steckereinheit 104 und ein zweites Bauteil 106 in Form eines Gehäusedeckels 108, beispielsweise eines Deckels für ein Getriebegehäuse, wobei die Steckereinheit 104 sich durch eine an dem Gehäusedeckel 108 vorgesehene ovale Durchtrittsöffnung 110 hindurch von einem Innenraum 112 des Gehäusedeckels 108 zu einem Außenraum 114 des Gehäusedeckels 108 erstreckt.

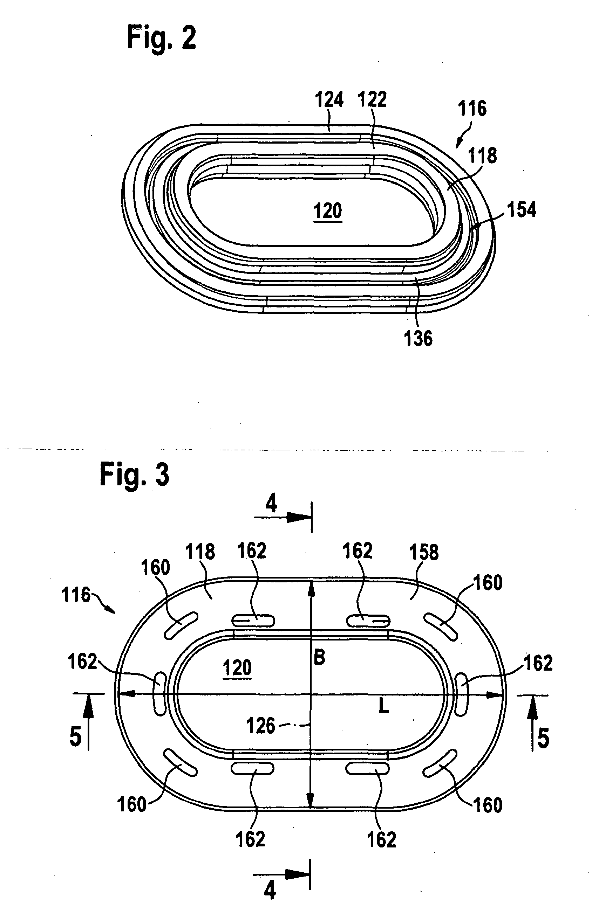

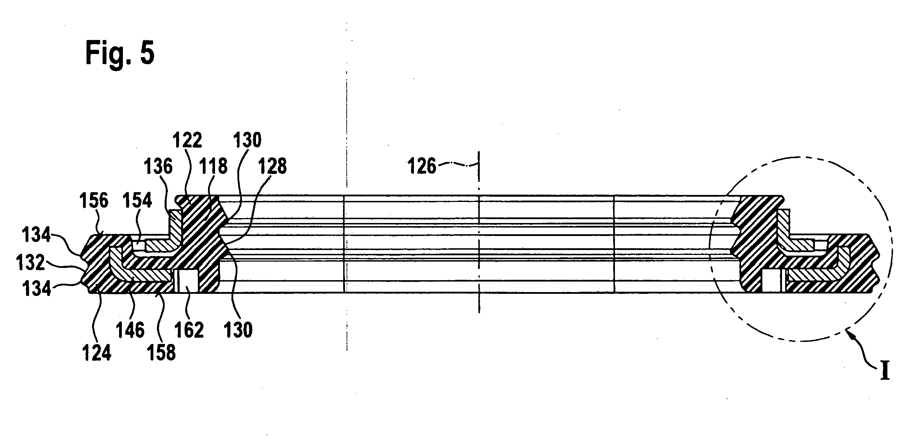

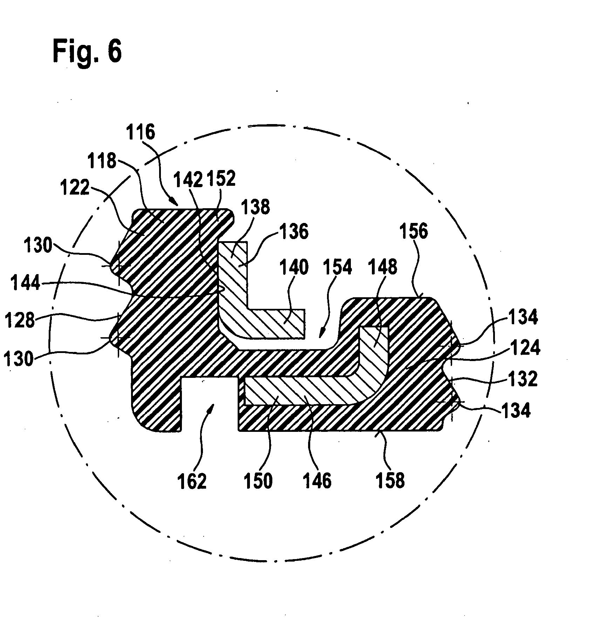

Um den Innenraum 112 gegenüber dem Außenraum 114 abzudichten, ist zwischen der Steckereinheit 104 und dem Gehäusedeckel 108 eine Radialdichtung 116 angeordnet, die im einzelnen in den Figuren 2 bis 6 dargestellt ist.

Die Radialdichtung 116 umfasst einen an die ovale Form der Durchtrittsöffnung 110 in dem Gehäusedeckel 108 angepassten, nicht rotationssymmetrischen, insbesondere ovalen, Dichtungskörper 118, welcher ringförmig geschlossen ausgebildet ist und sich um eine mittige Durchtrittsöffnung 120 der Radialdichtung 116 herum erstreckt.

Das Verhältnis der Länge L des Dichtungskörpers 118 zu dessen Breite B beträgt beispielsweise ungefähr 5:3.

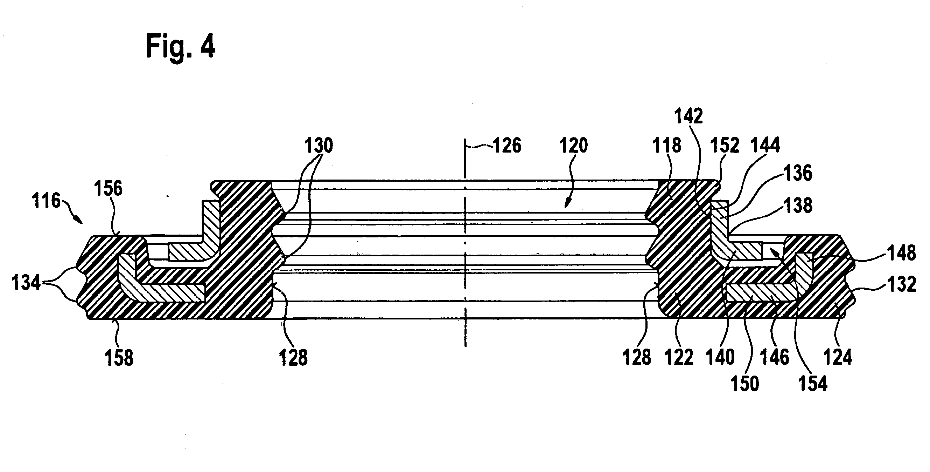

Wie aus den Figuren 4 bis 6 zu ersehen ist, weist der Dichtungskörper 118 einen radial innenliegenden inneren Abschnitt 122 mit einem im wesentlichen I-förmigen Querschnitt und einen radial außenliegenden äußeren Abschnitt 124 mit einem im wesentlichen L-förmigen Querschnitt auf.

Die radial nach innen, d. h. zur Ringachse 126 der Radialdichtung 116 hin, weisende innere Umfangsfläche des inneren Abschnitts 122 des Dichtungskörpers 118 bildet eine innere Dichtfläche 128 des Dichtungskörpers 118, welche mit mehreren, beispielsweise mit zwei, ringförmig geschlossen um die innere Dichtfläche 128 umlaufenden Dichtlippen 130 versehen ist.

Die radial nach außen, d. h. von der Ringachse 126 der Radialdichtung 116 weg, weisende äußere Umfangsfläche des äußeren Abschnitts 124 des Dichtungskörpers 118 bildet eine äußere Dichtfläche 132, welche ebenfalls mit mehreren, beispielsweise mit zwei, ringförmig geschlossen um die äußere Dichtfläche 132 umlaufenden Dichtlippen 134 versehen ist.

Der innere Abschnitt 122 und der äußere Abschnitt 124 des Dichtungskörpers 118 sind einstückig miteinander ausgebildet.

Ferner umfasst die Radialdichtung 116 ein erstes Versteifungselement 136, welches ringförmig geschlossen ausgebildet ist und eine an die äußere Umfangsfläche der im Querschnitt ovalen Steckereinheit 104 angepasste, nicht rotationssymmetrische, insbesondere ovale, Form aufweist.

Wie aus den Schnittdarstellungen der Figuren 4 bis 6 zu ersehen ist, weist das erste Versteifungselement 136 einen winkelförmigen Querschnitt auf mit einem axialen Schenkel 138 und einem sich von einem Ende des axialen Schenkels 138 radial nach außen erstreckenden radialen Schenkel 140.

Die radial innenliegende Innenfläche 142 des axialen Schenkels 138 liegt von außen an der radial außenliegenden Außenfläche 144 des inneren Abschnitts 122 des Dichtungskörpers 118 an.

Das erste Versteifungselement 136 ist vorzugsweise aus einem metallischen Material, insbesondere aus einer Aluminiumlegierung oder aus einem Stahlmaterial, gebildet.

Insbesondere kann das erste Versteifungselement aus der Aluminiumlegierung B046 gebildet sein.

Ferner umfasst die Radialdichtung 116 ein zweites Versteifungselement 146, welches in den äußeren Abschnitt 124 des Dichtungskörpers 118 eingebettet ist.

Das zweite Versteifungselement 146 ist ringförmig geschlossen ausgebildet und weist eine nicht rotationssymmetrische, insbesondere ovale, Form auf, welche an die Gestalt des Randes der Durchtrittsöffnung 110 in dem Gehäusedeckel 108 angepasst ist.

Das zweite Versteifungselement 146 weist einen winkelförmigen Querschnitt auf, mit einem axialen Schenkel 148 und mit einem sich von einem Ende des axialen Schenkels 148 radial nach innen erstreckenden radialen Schenkel 150.

Wie aus den Figuren 4 bis 6 zu ersehen ist, sind die axialen Schenkel 138 und 148 des ersten Versteifungselements 136 bzw. des zweiten Versteifungselements 146 sowohl in axialer Richtung, d. h. in Richtung der Ringachse 126 der Radialdichtung 116, als auch in radialer Richtung, d. h. senkrecht zur Ringachse 126 der Radialdichtung 116, gegeneinander versetzt angeordnet. Ferner sind auch die radialen Schenkel 140 und 150 des ersten Versteifungselements 136 bzw. des zweiten Versteifungselements 146 in der axialen Richtung der Radialdichtung 116 gegeneinander versetzt angeordnet.

Auch das zweite Versteifungselement 146 ist vorzugsweise aus einem metallischen Material, insbesondere aus einer Aluminiumlegierung oder aus einem Stahlmaterial, gebildet.

Insbesondere kann das zweite Versteifungselement aus der Aluminiumlegierung B046 gebildet sein.

Der Dichtungskörper 118, in welchen das zweite Versteifungselement 146 eingebettet ist, ist vorzugsweise aus einem elastomeren Kunststoffmaterial, beispielsweise aus einem Ethylen-Acrylat-Kautschuk (AEM) oder aus einem Fluor-Kautschuk (FBM), gebildet.

Insbesondere kann der Dichtungskörper 118 aus dem Ethylen-Acrylat-Kautschuk mit der Bezeichnung AEM 6033 gebildet sein.

Zwischen dem äußeren Abschnitt 124 und dem inneren Abschnitt 122 des Dichtungskörpers 118 ist eine Ausnehmung 154 an dem Dichtungskörper 118 ausgebildet, welche den radialen Schenkel 140 und einen unteren Abschnitt des axialen Schenkels 138 des ersten Versteifungselementes 136 aufnimmt.

Ferner ist an dem dieser Ausnehmung 154 abgewandten oberen Ende des inneren Abschnitts 122 des Dichtungskörpers 118 ein Rückhaltewulst 152 ausgebildet, welcher um den oberen Rand der Außenfläche 144 des inneren Abschnitts 122 des Dichtungskörpers 118 umläuft und radial nach außen vorspringt, so dass das erste Versteifungselement 136 durch den Rückhaltewulst 152 gegen ein Abgleiten von dem Dichtungskörper 118 in axialer Richtung gesichert ist und somit an dem Dichtungskörper 118 zurückgehalten wird.

Die untere, quer zur Ringachse 126 ausgerichtete Stirnfläche des Dichtungskörpers 118 bildet eine erste Anlagefläche 158 des Dichtungskörpers 118, mit welcher der Dichtungskörper 118 an dem ersten Bauteil 102 in Form einer Steckereinheit 104 zur Anlage kommen kann.

Die obere, quer zur Ringachse 126 ausgerichtete Stirnfläche des äußeren Abschnitts 124 des Dichtungskörpers 118 bildet eine zweite Anlagefläche 156, mit welcher der Dichtungskörper 118 an dem zweiten Bauteil 106 in Form eines Gehäusedeckels 108 zur Anlage kommen kann.

Zur Herstellung der vorstehend beschriebenen Radialdichtung 116 wird wie folgt vorgegangen:

Es wird eine Spritzgießform bereitgestellt, deren Innenkontur der Außenkontur des Dichtungskörpers 118 entspricht.

In diese Spritzgießform wird das zweite Versteifungselement 146 in der gewünschten Position angeordnet, wobei das zweite Versteifungselement 146 in dieser Position durch in den Innenraum der Spritzgießform hineinragende Noppen gehalten wird.

Anschließend wird die Spritzgießform mit einem spritzgießfähigen Kunststoffmaterial ausgefüllt, wodurch das zweite Versteifungselement 146 in das Kunststoffmaterial eingebettet wird, und das Kunststoffmaterial ausgehärtet, um den Dichtungskörper 118 zu bilden.

Schließlich wird das erste Versteifungselement 136 in axialer Richtung über den Rückhaltewulst 152 hinweg auf den inneren Abschnitt 122 des Dichtungskörpers 118 aufgeschoben.

Den das zweite Versteifungselement 146 beim Spritzgießen haltenden Noppen entsprechen längliche Ausnehmungen 160 und 162, die zur Form der Noppen komplementär ausgebildet und an der unteren Stirnfläche des Dichtungskörpers 118 ausgebildet sind (siehe Figur 3).

Diese Ausnehmungen 160, 162 erhöhen auch die elastische Verformbarkeit des Dichtungskörpers 118 und damit die Beweglichkeit der inneren Dichtfläche 128 und der äußeren Dichtfläche 132 relativ zueinander.

Bei der Montage der Baugruppe 100 wird die Radialdichtung 116 so an dem zweiten Bauteil 106 des Gehäusedeckels 108 angeordnet, dass die zweite Anlagefläche 156 des Dichtungskörpers 118 an einer um die Durchtrittsöffnung 110 im Gehäusedeckel 108 umlaufenden axialen Anlagefläche 164 und die äußere Dichtfläche 132 des Dichtungskörpers 118 mit den Dichtlippen 134 an einer radialen Anlagefläche 166 des Gehäusedeckels 108 anliegen.

Anschließend wird das erste Bauteil 102 in Form der Steckereinheit 104 von dem Innenraum 112 des Gehäusedeckels 108 her so weit in die mittige Durchtrittsöffnung 120 des Dichtungskörpers 118 eingeschoben, dass die innere Dichtfläche 128 des Dichtungskörpers 118 mit den Dichtlippen 130 an einer radialen Anlagefläche 168 eines im Querschnitt ovalen Anlagekörpers 170 der Steckereinheit 104 anliegt.

Die erste Anlagefläche 158 des Dichtungskörpers 118 kann im fertig montierten Zustand an einer axialen Anlagefläche 171 der Steckereinheit 104 anliegen oder aber von derselben beabstandet sein, wie in Figur 1 dargestellt.

Im fertig montierten Zustand dichtet die Radialdichtung 116 den Zwischenraum zwischen der Steckereinheit 104 und dem Gehäusedeckel 108 durch das Anliegen der inneren Dichtfläche 128 mit den Dichtlippen 130 an der radialen Anlagefläche 168 der Steckereinheit 104 und durch das Anliegen der äußeren Dichtfläche 132 mit den Dichtlippen 134 an der radialen Anlagefläche 166 des Gehäusedeckels 108 zuverlässig radial ab.

Dabei wird die innere Dichtfläche 128 durch das erste Versteifungselement 136 gegen eine von der Steckereinheit 104 auf den Dichtungskörper 118 ausgeübte, radial nach außen wirkende Presskraft abgestützt.

Ferner wird die äußere Dichtfläche 132 durch das zweite Versteifungselement 146 gegen eine von dem Gehäusedeckel 108 auf den Dichtungskörper 118 ausgeübte, radial nach innen wirkende Presskraft abgestützt.

Auf diese Weise behält der Dichtungskörper 118 seine an die Form des Querschnitts der Steckereinheit 104 angepasste, nicht rotationssymmetrische, insbesondere ovale, Form bei, so dass eine zuverlässige Abdichtwirkung an der inneren Dichtfläche 128 und der äußeren Dichtfläche 132 gewährleistet ist.

Dadurch, dass der Dichtungskörper 118 elastisch verformbar ist und das erste Versteifungselement 136 und das zweite Versteifungselement 146 relativ zueinander verschiebbar sind, können ferner Versatztoleranzen zwischen dem ersten Bauteil 102 und dem zweiten Bauteil 106 sowohl in radialer Richtung als auch in axialer Richtung, d. h. sowohl quer als auch parallel zur Ringachse 126, in weitem Umfang ausgeglichen werden.

Die Gestalt des Dichtungskörpers 118 und der Versteifungselemente 136, 146 kann dabei an die jeweilige Form des Querschnitts des ersten Bauteils 102, also beispielsweise der Steckereinheit 104, angepasst werden.

Diese Form muss also nicht zwingend oval sein, sondern kann jede beliebige nicht rotationssymmetrische Form annehmen.

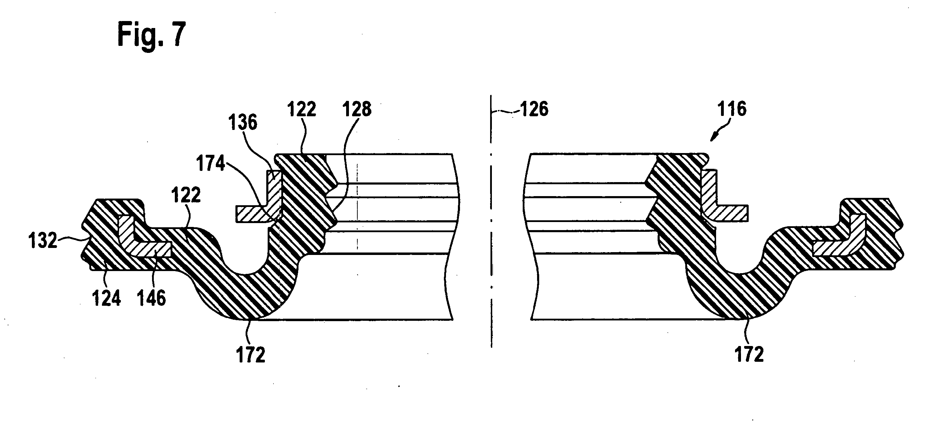

Eine in Figur 7 dargestellte zweite Ausführungsform einer Radialdichtung 116 unterscheidet sich von der vorstehend beschriebenen ersten Ausführungsform dadurch, dass der Dichtungskörper 118 der zweiten Ausführungsform zusätzlich zu dem inneren Abschnitt 122 mit der inneren Dichtfläche 128 und dem äußeren Abschnitt 124 mit der äußeren Dichtfläche 132 einen den inneren Abschnitt 122 mit dem äußeren Abschnitt 124 verbindenden Ausgleichsbereich 172 umfasst, welcher in der radialen Richtung und in der axialen Richtung, d. h. quer und parallel zur Ringachse 126, verformbar ist, so dass die innere Dichtfläche 128 und das erste Versteifungselement 136 einerseits und die äußere Dichtfläche 132 sowie das zweite Versteifungselement 146 andererseits in noch größerem Ausmaß als bei der ersten Ausführungsform sowohl in radialer Richtung als auch in axialer Richtung relativ zueinander verschoben werden können, um radiale oder axiale Versatztoleranzen von beispielsweise bis zu +/- 3 mm zwischen dem ersten Bauteil 102 und dem zweiten Bauteil 106 auszugleichen.

Der Ausgleichsbereich 172 kann insbesondere, wie in Figur 7 dargestellt, einen im wesentlichen U-förmigen Querschnitt aufweisen.

Am Übergang zwischen dem Ausgleichsbereich 172 und dem inneren Abschnitt 122 des Dichtungskörpers 118 ist eine Schulter 174 ausgebildet, welche den axialen Verschiebungsweg des ersten Versteifungselements 136 relativ zu dem Dichtungskörper 118 nach unten begrenzt.

Im übrigen stimmt die in Fig. 7 dargestellte zweite Ausführungsform einer Radialdichtung 116 mit der in den Fig. 2 bis 6 dargestellten ersten Ausführungsform überein, auf deren vorstehende Beschreibung insoweit Bezug genommen wird.

## Patentansprüche

1. Radialdichtung zur Abdichtung zwischen einem radial innerhalb der Radialdichtung (116) angeordneten ersten Bauteil (102) und einem radial außerhalb der Radialdichtung (116) angeordneten zweiten Bauteil (106), umfassend
einen Dichtungskörper (118) mit einer inneren Dichtfläche (128) zum Anlegen an das erste Bauteil (102) und einer äußeren Dichtfläche (132) zum Anlegen an das zweite Bauteil (106),
ein erstes Versteifungselement (136), welches die innere Dichtfläche (128) gegen eine radial nach außen wirkende Presskraft abstützt, und ein zweites Versteifungselement (146), welches die äußere Dichtfläche (132) gegen eine radial nach innen wirkende Presskraft abstützt, **dadurch gekennzeichnet, dass** der Dichtungskörper eine nicht rotationssymetrische Form aufweist, wobei das erste Versteifungselement (136) und/oder das zweite Versteifungselement (146) zumindest teilweise an einer Außenfläche (144) des Dichtungskörpers (118) anliegen und
wobei das erste Versteifungselement (136) und das zweite Versteifungselement (146) jeweils mindestens einen im Wesentlichen in axialer Richtung der Radialdichtung (116) ausgerichteten Abschnitt (138, 148) und jeweils mindestens einen im Wesentlichen in radialer Richtung der Radialdichtung (116) ausgerichteten Abschnitt (140, 150) aufweisen.

2. Radialdichtung nach Anspruch 1, **dadurch gekennzeichnet, dass** das Verhältnis der Länge des Dichtungskörpers (118) zur Breite des Dichtungskörpers (118) mindestens 1,2:1, vorzugsweise mindestens 1,5:1, beträgt.

3. Radialdichtung nach einem der Ansprüche 1 oder 2, **dadurch gekennzeichnet, dass** der Dichtungskörper (118) eine in der Draufsicht im wesentlichen ovale Form aufweist.

4. Radialdichtung nach einem der Ansprüche 1 bis 3, **dadurch gekennzeichnet, dass** das erste Versteifungselement (136) und/oder das zweite Versteifungselement (146) ringförmig geschlossen ausgebildet sind.

5. Radialdichtung nach einem der Ansprüche 1 bis 4, **dadurch gekennzeichnet, dass** das erste Versteifungselement (136) und/oder das zweite Versteifungselement (146) eine an die Gestalt einer Umfangsfläche (168) des ersten Bauteils (102) angepasste Form aufweisen.

6. Radialdichtung nach einem der Ansprüche 1 bis 5, **dadurch gekennzeichnet, dass** das erste Versteifungselement (136) und/oder das zweite Versteifungselement (146) zumindest teilweise in den Dichtungskörper (118) eingebettet sind.

7. Radialdichtung nach einem der Ansprüche 1 bis 6, **dadurch gekennzeichnet, dass** das erste Versteifungselement (136) und/oder das zweite Versteifungselement (146) aus einem metallischen Material gebildet sind.

8. Radialdichtung nach einem der Ansprüche 1 bis 7, **dadurch gekennzeichnet, dass** das erste Versteifungselement (136) und das zweite Versteifungselement (146) in der axialen Richtung der Radialdichtung (116) gegeneinander versetzt angeordnet sind.

9. Radialdichtung nach einem der Ansprüche 1 bis 8, **dadurch gekennzeichnet, dass** das erste Versteifungselement (136) und das zweite Versteifungselement (146) in der axialen Richtung und/oder in der radialen Richtung der Radialdichtung (116) relativ zueinander beweglich sind.

10. Radialdichtung nach einem der Ansprüche 1 bis 9, **dadurch gekennzeichnet, dass** der Dichtungskörper (118) aus einem, insbesondere elastomeren, Kunststoffmaterial gebildet ist.

11. Radialdichtung nach Anspruch 10, **dadurch gekennzeichnet, dass** der Dichtungskörper (118) aus einem Ethylen-Acrylat-Kautschuk oder aus einem Fluor-Kautschuk gebildet ist.

12. Radialdichtung nach einem der Ansprüche 1 bis 11, **dadurch gekennzeichnet, dass** der Dichtungskörper (118) einen Ausgleichsbereich (172) umfasst, welcher in der radialen Richtung und/oder in der axialen Richtung des Dichtungskörpers (118) verformbar ist.

13. Radialdichtung nach Anspruch 12, **dadurch gekennzeichnet, dass** der Ausgleichsbereich (172) einen im wesentlichen U-förmigen Querschnitt aufweist.

## Claims

1. Radial seal for sealing between a first component (102) arranged radially inside the radial seal (116) and a second component (106) arranged radially outside the radial seal (116), comprising a sealing body (118) with an inner sealing face (128) for application to the first component (102) and an outer sealing face (132) for application to the second component (106), a first reinforcement element (136), which supports the inner sealing face (128) against a pressing force acting radially outwardly, and a second reinforcement element (146), which supports the outer sealing face (132) against a pressing force acting radially inwardly, **characterised in that** the sealing body has a non-rotationally-symmetrical shape, wherein the first reinforcement element (136) and/or the second reinforcement element (146) abut at least partially on an outer face (144) of the sealing body (118) and wherein the first reinforcement element (136) and the second reinforcement element (146) each have at least one portion (138, 148) oriented substantially in the axial direction of the radial seal (116) and each have at least one portion (140, 150) oriented substantially in the radial direction of the radial seal (116).

2. Radial seal according to claim 1, **characterised in that** the ratio of the length of the sealing body (118) to the width of the sealing body (118) is at least 1.2:1, preferably at least 1.5:1.

3. Radial seal according to either claim 1 or 2, **characterised in that** the sealing body (118) has a substantially oval shape in plan view.

4. Radial seal according to any of claims 1 to 3, **characterised in that** the first reinforcement element (136) and/or the second reinforcement element (146) are configured in an annularly closed manner.

5. Radial seal according to any of claims 1 to 4, **characterised in that** the first reinforcement element (136) and/or the second reinforcement element (146) have a shape adapted to the form of a peripheral face (168) of the first component (102).

6. Radial seal according to any of claims 1 to 5, **characterised in that** the first reinforcement element (136) and/or the second reinforcement element (146) are at least partially embedded in the sealing body (118).

7. Radial seal according to any of claims 1 to 6, **characterised in that** the first reinforcement element (136) and/or the second reinforcement element (146) are formed from a metallic material.

8. Radial seal according to any of claims 1 to 7, **characterised in that** the first reinforcement element (136) and the second reinforcement element (146) are arranged offset with respect to one another in the axial direction of the radial seal (116).

9. Radial seal according to any of claims 1 to 8, **characterised in that** the first reinforcement element (136) and the second reinforcement element (146) are movable relative to one another in the axial direction and/or in the radial direction of the radial seal (116).

10. Radial seal according to any of claims 1 to 9, **characterised in that** the sealing body (118) is formed from an, in particular elastomeric, plastics material.

11. Radial seal according to claim 10, **characterised in that** the sealing body (118) is formed from an ethylene-acrylate rubber or from a fluoro-rubber.

12. Radial seal according to any of claims 1 to 11, **characterised in that** the sealing body (118) comprises a compensation region (172), which is deformable in the radial direction and/or in the axial direction of the sealing body (118).

13. Radial seal according to claim 12, **characterised in that** the compensation region (172) has a substantially U-shaped cross-section.

## Revendications

1. Joint radial destiné à l'étanchéité entre un premier composant (102) disposé radialement dans le joint radial (116) et un second composant (106) disposé radialement en dehors du joint radial (116), comprenant
un corps de joint (118) avec une surface étanche (128) intérieure destinée à reposer contre le premier composant (102) et une surface étanche (132) extérieure destinée à reposer contre le second composant (106),
un premier élément de renforcement (136) qui appuie la surface étanche intérieure (128) contre une force de pression agissant radialement vers l'extérieur, et un second élément de renforcement (146) qui appuie la surface étanche extérieure (132) contre une force de pression agissant radialement vers l'intérieur, **caractérisé en ce que** le corps de joint présente une forme non symétrique en rotation, le premier élément de renforcement (136) et/ou le second élément de renforcement (146) reposant au moins en partie contre une surface extérieure (144) du corps de joint (118) et
le premier élément de renforcement (136) et le second élément de renforcement (146) présentant respectivement au moins une section (138, 148) orientée sensiblement dans le sens axial du joint radial (116) et respectivement au moins une section (140, 150) orientée sensiblement dans le sens radial du joint radial (116).

2. Joint radial selon la revendication 1, **caractérisé en ce que** le rapport entre la longueur du corps de joint (118) et la largeur du corps de joint (118) s'élève au moins à 1,2:1, de préférence au moins à 1,5:1.

3. Joint radial selon l'une quelconque des revendications 1 ou 2, **caractérisé en ce que** le corps de joint (118) présente une forme sensiblement ovale en vue en élévation.

4. Joint radial selon l'une quelconque des revendications 1 à 3, **caractérisé en ce que** le premier élément de renforcement (136) et/ou le second élément de renforcement (146) sont réalisés fermés comme un anneau.

5. Joint radial selon l'une quelconque des revendications 1 à 4, **caractérisé en ce que** le premier élément de renforcement (136) et/ou le second élément de renforcement (146) présentent une forme adaptée à l'apparence d'une surface périphérique (168) du premier composant (102).

6. Joint radial selon l'une quelconque des revendications 1 à 5, **caractérisé en ce que** le premier élément de renforcement (136) et/ou le second élément de renforcement (146) sont noyés au moins en partie dans le corps de joint (118).

7. Joint radial selon l'une quelconque des revendications 1 à 6, **caractérisé en ce que** le premier élément de renforcement (136) et/ou le second élément de renforcement (146) sont constitués d'un matériau métallique.

8. Joint radial selon l'une quelconque des revendications 1 à 7, **caractérisé en ce que** le premier élément de renforcement (136) et le second élément de renforcement (146) sont disposés en déport l'un de l'autre dans le sens axial du joint radial (116).

9. Joint radial selon l'une quelconque des revendications 1 à 8, **caractérisé en ce que** le premier élément de renforcement (136) et le second élément de renforcement (146) sont mobiles l'un par rapport à l'autre dans le sens axial et/ou dans le sens radial du joint radial (116).

10. Joint radial selon l'une quelconque des revendications 1 à 9, **caractérisé en ce que** le corps de joint (118) est constitué d'un matériau plastique, en particulier élastomère.

11. Joint radial selon la revendication 10, **caractérisé en ce que** le corps de joint (118) est constitué d'un caoutchouc d'éthylène acrylate ou d'un caoutchouc fluoré.

12. Joint radial selon l'une quelconque des revendications 1 à 11, **caractérisé en ce que** le corps de joint (118) comporte une zone de compensation (172) qui peut être déformée dans le sens radial et/ou dans le sens axial du corps de joint (118).

13. Joint radial selon la revendication 12, **caractérisé en ce que** la zone de compensation (172) présente une section transversale sensiblement en forme de U.
